# EUROPÄISCHE PATENTSCHRIFT

(11) **EP 0 866 629 B1**
(45) Veröffentlichungstag und Bekanntmachung des Hinweises auf die Patenterteilung: **26.11.2003**
(21) Anmeldenummer: 97115779.7
(22) Anmeldetag: 11.09.1997
(51) Int. Cl.: H04Q 11/00

(54) **Punkt-zu-Mehrpunkt Funkübertragungssystem**
One-to-many-points radio transmission system
Système de transmission radiophonique à lots singulaires pour multipes

(30) Priorität: 13.02.1997 DE 19705449
(43) Veröffentlichungstag der Anmeldung: 23.09.1998
(73) Patentinhaber: Marconi Communications GmbH, 71522 Backnang (DE)
(72) Erfinder: Auer, Erich, 74354 Besigheim (DE)
(74) Vertreter: Pellkofer, Dieter Dr.

(56) Entgegenhaltungen:
- EP-A- 0 480 502
- EP-A- 0 553 537
- DE-C- 4 321 348

## Beschreibung

### Stand der Technik

Die vorliegende Erfindung betrifft ein Punkt-zu-Mehrpunkt Funkübertragungssystem, bestehend aus einer Zentralstation und mehreren Teilnehmerstationen, wobei die Übertragungskanäle zwischen der Zentralstation und den Teilnehmerstationen bedarfsweise zuteilbar sind.

Funkübertragungssysteme, seien es terrestrische Richtfunksysteme oder Satellitenübertragungssysteme, erlauben es, neue Funkverbindungen sehr schnell zu installieren oder bestehende zu ergänzen. In heutigen Kommunikationssystemen unterscheidet man zwischen geschalteten Verkehrsverbindungen mit fester oder dynamisch sich ändernder Datenrate und paketorientierten Verkehrsverbindungen. Zu den geschalteten Verkehrsverbindungen gehören z.B. die Telephonie (analog oder digital, POTS oder ISDN), Fax-Übertragung, Datenübertragung mit konstanter Datenrate über Standleitungen u.dgl. Beispiele für paketorientierten Datenverkehr sind LAN-Verbindungen, Frame Relay Dienste und neuerdings auch ATM-Übertragung; charakteristisch hierfür ist die burstartige Übertragung von Datenpaketen.

Funkübertragungssysteme im Teilnehmerzugangsbereich sollten für beide Arten der Kommunikationsverbindungen das zur Verfügung stehende Frequenzspektrum möglichst optimal nutzen. Als Nebenbedingung muß die Funkübertragung gegenüber störenden Einflüssen (z.B. wetterbedingtes Fading, frequenzselektives Fading, Interferenzen durch Reflexionen, Interferenzen durch benachbarte Funkzellen, Interferenzen durch andere Funkdienste, Amplituden-und Phasenverzerrungen) möglichst resisent sein.

Die Forderung nach optimaler Nutzung des zur Verfügung stehenden Frequenzspektrums läßt sich mit Punkt-zu-Mehrpunkt Funkübertragungssystemen verwirklichen. Ein Punkt-zu-Mehrpunkt Funkübertragungssystem ist im Mikrowellen-Maganzin Vol. 10, No. 6, 1984, S. 629, 630 dargelegt. Danach läßt sich die Ausnutzung des Frequenzbandes des zur Verfügung stehenden Funkkanals durch eine nur bedarfsweise Belegung des erforderlichen Frequenzbandes verbessern. Die Kommunikation zwischen der Zentralstation und den einzelnen Teilnehmerstationen erfolgt entweder durch Vielfachzugriff im Frquenzmultiplex (FDMA), im Zeitmultiplex (TDMA), im Codemultiplex (CDMA), im Raummultiplex (SDMA) oder in Mischformen dieser Zugriffsverfahren, wobei die Frequenzkanäle, die Zeitschlitze, die Spreizcodes und die räumlichen Antennenkeulen je nach Bedarf der Teilnehmer zugeteilt werden können.

Bei einem Punkt-zu-Mehrpunkt Richtfunksystem gemäß der deutschen Anmeldung DE 44 26 183 A1 wird die Übertragungskapazität dadurch flexibel an den Bedarf der Teilnehmer angepaßt, daß die Bandbreite der einzelnen Übertragungskanäle auf die von den einzelnen Teilnehmern jeweils geforderte Datenübertragungsrate eingestellt wird. Auch ist eine veränderbare Einstellung der Modulationsart und des Modulationsgrades (z.B. N-PSK, mit N = 2 ... 16 oder M-QAM mit M = 4 ... 256) auf den einzelnen Übertragungskanälen vorgesehen.

Der Erfindung liegt die Aufgabe zugrunde, ein Punkt-zu-Mehrpunkt Funkübertragungssystem der eingangs genannten Art anzugeben, das einerseits sowohl eine flexible Zuweisung und Anpassung von Übertragungskapazitäten auf die zugeschalteten Teilnehmerstationen unterbrechungs- und störungsfrei ermöglicht, als auch andererseits die Funkübertragung gegenüber störenden Einflüssen möglichst resistent macht. Das Funkübertragungssystem soll in der Lage sein, die verschiedensten Arten von Datenverkehr zu bewältigen.

### Vorteile der Erfindung

Die gestellte Aufgabe wird mit den Merkmalen des Patentanspruchs 1 dadurch gelöst, daß die Zentralstationen des Funkübertragungssystems für jeden der maximal zur Verfügung stehenden Übertragungskanäle ein Modem aufweist und ebenfalls jede Teilnehmerstation mit einem Modem ausgestattet ist. Dabei weist jedes Modem mehrere Sendekanäle und mehrere Empfangskanäle auf. Über einige der Sendekanäle und Empfangskanäle sollen geschaltete Daten und über andere Sende- und Empfangskanäle paketorientierte Daten übertragen werden. Eine Steuereinrichtung sorgt dafür, daß den paketorientierten Daten andere Sende- und Empfangskanäle zugeordnet werden als den geschalteten Daten. Die Steuereinrichtung stellt je nach der geforderten Zahl und Bandbreite der Übertragungskanäle und/oder der geforderten Störresistenz der Übertragungskanäle in den Sende- und Empfangskanälen sowohl für die geschalteten als auch für die paketorientierten Daten mindestens einen der Übertragungsparameter - Kanalträgerfrequenz, Datenrate, Modulation, Codierung, Sendepegel, Parameter zur Signalqualitätsbeurteilung - ein.

Zweckmäßige Weiterentwicklungen und Ausführungen der Erfindung gehen aus den Unteransprüchen hervor.

Die Trennung des geschalteten Datenverkehrs von dem paketorientierten Datenverkehr auf mindestens zwei Modemfunktionen und damit auf zwei unterschiedliche physikalische Übertragungskanäle hat folgende Vorteile:

Die Anforderungen an die Übertragungssicherheit (Bitfehlerrate) sind z.B. für geschaltete Sprachverbindungen im Telefonnetz deutlich unterschiedlich zu paketorientierten Datenverbindungen z.B. in ATM- (Asynchronous Transmission Mode) Netzen. Daher erlauben physikalisch unabhängige Übertragungskanäle für geschaltete und paketorientierte Datenverbindungen eine individuelle Optimierung der Übertragungsparameter gemäß entsprechenden Anforderungen. Es ergibt sich eine effizientere Nutzung der Funkresourcen (Frequenz und Sendeleistung) im vergleich zu anderen Funkübertragungssystemen.

Da bei pakektorientierten Datenverbindungen eine burstartige Übertragung von Datenpaketen stattfindet, können die während einer Übertragung im TDM- oder TDMA-Zugriffsverfahren durch einen Teilnehmer genutzten Funkresourcen in den Zeiten zwischen den Übertragungen von Datenpaketen durch andere Teilnehmer in derselben Weise optimal genutzt werden.

Die Übertragung von geschalteten Daten wird aufgrund der Tatsache, daß sie auf anderen physikalischen Kanälen übertragen werden als paketorientierte Daten, in keinster Weise durch die Übertragungen von paketorientierten Daten gestört oder beeinträchtigt. Dasselbe gilt auch umgekehrt für paketorientierten Datenverkehr, der durch den geschalteten Datenverkehr unbeeinflußt bleibt.

Ein entscheidender Vorteil für die zentrale Steuerung der burstartigen, paketorientierten Daten ergibt sich aus der Nutzung des permanent vorhandenen Signalisierungskanals, der mit den geschalteten Daten übertragen wird. Anders gesagt, kann bei der vorliegenden Methode im Gegensatz zu sonst bekannten einen TDMA-Systemen einen aufwendige und genaue Zeitsynchronisation aller Teilnehmerstationen entfallen, da mit den geschalteten Daten permanent ein Signalisierungskanal übertragen wird, der auch zur Steuerung der Übertragungszeiten von Datenpaketen genutzt werden kann.

Bei einem reinen TDMA-System besteht das Risiko, daß durch eine nicht oder falsch synchronisierte Teilnehmerstation die gesamte Funkzelle gestört werden kann. Im erfindungsgemäßen Lösungsansatz besteht diese Gefahr nicht, da jede Teilnehmerstation über den permanent vorhandenen Signalisierungskanal desjenigen Modemkanals gesteuert wird, der den geschalteten Datenverkehr überträgt. Die Zuteilung von Übertragungskapazität für paketorientierte Daten läuft grundsätzlich nach folgendem Schema ab. Zuerst erfolgt eine Anforderung von der jeweiligen Teilnehmerstation an die Basisstation, dann wird eine Prüfung sämtlicher Übertragungsparameter in einer Steuereinheit innerhalb der Basisstation vorgenommen, und schließlich geht von der Basisstation an die Teilnehmerstationen eine Zuteilung der Übertragungskanäle und deren Übertragungsparameter aus. Dadurch ist ein kollisionsfreier Betrieb zwischen den geschalteten und den paketorientierten Daten sichergestellt. Außerdem erhalten nur jene Teilnehmerstationen eine Sendeberechtigung, die aufgrund laufender Überwachung via Signalisierungskanal voll funktionsfähig und im Takt der Zeitsteuerung sind.

Die Übertragungsparameter - Sendefrequenz, Sendepegel, Datenrate, Modulationsart, Kanalcodierung usw. - können für die paketorientierten Daten dynamisch, wenn erforderlich, von Burst zu Burst an die augenblicklichen Verhältnisse auf dem Funkkanal angepaßt werden. Damit ist wie für die geschalteten Daten auch für die paketorientierten Daten eine unabhängige Optimierung der Übertragungskanäle im Hinblick auf eine möglichst günstige Nutzung der Funkresourcen gegeben.

### Beschreibung von Ausführungsbeispielen

Anhand mehrerer in der Zeichnung dargestellter Ausführungsbeispiele wird nachfolgend die Erfindung näher erläutert. Es zeigen:
Figur 1 ein Blockschaltbild eines Punkt-zu-Mehrpunkt Funkübertragungssystems, welches Einrichtungen zur Übertragung von geschaltetem und paketorientiertem Datenverkehr enthält,
Figuren 2 und 3 Blockschaltbilder von Modems verschiedener Ausführungen, die ebenfalls Einrichtungen zur Übertragung von geschaltetem und paketorientiertem Datenverkehr enthalten,
Figuren 4, 5, 6 und 7 Blockschaltbilder von Modems mit verschienartig gemultiplexten Sende- bzw. Empfangskanälen.

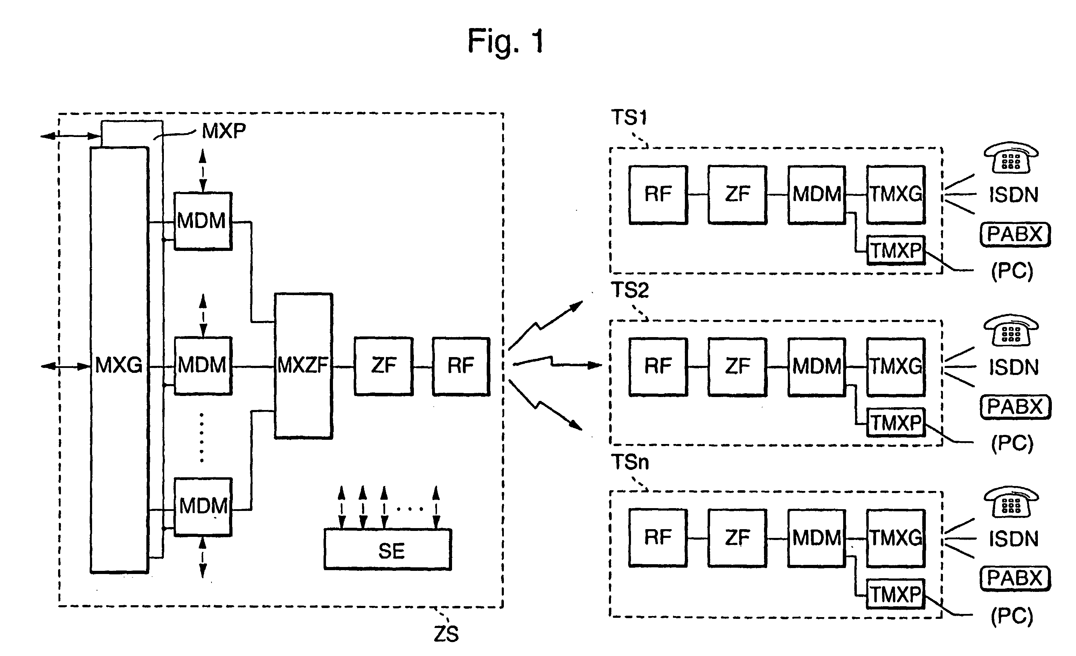

Das in Figur 1 prinzipiell dargestellte Punkt-zu-Mehrpunkt Funkübertragungssystem besteht aus einer Zentralstation ZS und mehreren Teilnehmerstationen TS1, TS2 ... Tsn. Die Zentralstation ZS weist so viele parallelgeschaltete Modems MDM auf, wie maximal Teilnehmerstationen TS1, TS2 ... TSn eine Funkverbindung für geschaltete und/oder paketorientierte Daten mit der Zentralstation ZS aufnehmen können. Alle Modems MDM der Zentralstation ZS sind an beiden Ausgängen über Multiplexer/Demultiplexer MXG bzw. MXP und MXZF zusammengeschaltet. Der Multiplexer/Demultiplexer MXG stellt die Verbindung zu geschalteten Nachrichtennetzen her, und der Multiplexer/Demultiplexer MXP stellt die Verbindung zu paketorientierten Nachrichtennetzen her.

An den Multiplexer/Demultiplexer MXZF ist ein Schaltblock ZF angeschlossen, der die Umsetzung der auszusendenden oder empfangenen Signale in eine Zwischenfrequenzebene vornimmt. Daran schließt sich eine Sende-Empfangseinheit (Frontend) RF an. Die Zentralstation ZS enthält eine Steuereinrichtung SE, die die Funkresourcen sowohl bezüglich des geschalteten als auch des paketorientierten Datenverkehrs verwaltet und auf Bedarf zuteilt, wie weiter unten noch näher beschrieben wird.

Einen ähnlichen Aufbau wie die Zentralstation ZS weisen die einzelnen Teilnehmerstationen TS1, TS2, ... TSn auf. An eine Sende-/Empfangseinheit RF schließt sich eine Zwischenfrequenzschaltung ZF an, die wiederum mit einem Modem MDM verbunden ist. Ein Multiplexer/Demultiplexer TMXG stellt für den geschalteten Verkehr die Verbindung zwischen dem Modem MDM und den Endstelleneinrichtungen (z.B. Telefon) oder öffentlichen oder privaten Nachrichtennetzen (ISDN, PABX) her. Ein weiterer Multiplexer-Demultiplexer TMXP stellt für den paketorientierten Datenverkehr die Verbindung zwischen dem Modem MDM und den zugehörigen Endstelleneinrichtungen (z.B. PC oder Workstation mit Daten-, LAN- oder ATM-Schnittstelle) her.

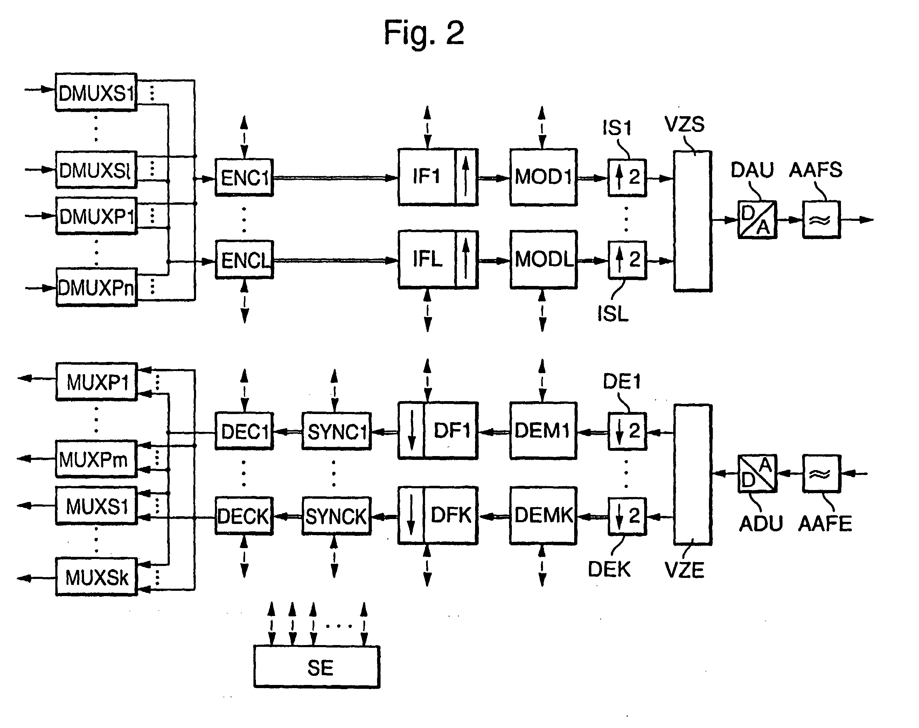

Die Figur 2 zeigt ein Beispiel für den Aufbau eines Modems MDM, wie es in gleicher Weise in der Zentralstation ZS und in den einzelnen Teilnehmerstationen TS1, TS2, ... TSn eingesetzt ist. Das Modem besitzt L Sende- und K Empfangskanäle, wobei L ≥2 und ebenfalls K ≥2 vorausgesetzt wird. Mindestens einer der L Sende- bzw. K Empfangskanäle wird einerseits durch Umschaltung dazu genutzt für den geschalteten Datenverkehr dynamisch die Übertragungsparameter anzupassen und andererseits zwischen den Umschaltevorgängen zur burstartigen Übertragung von paketorientiertem Datenverkehr verwendet. Aus diesen Gründen sind in Senderichtung l (1 ≤ l ≤ L-1; L ≥2) Demultiplexer DMUXS1 bis DMUXS1 vorgesehen, die jeweils den geschalteten Verkehr wahlfrei an einen der l aus L Encodern ENC1 bis ENC1 führen. Außerdem sind in Senderichtung noch n (1 ≤ n ≤ L-1; L ≥ 2) Demultiplexer DMUXP1 bis DMUXPn vorgesehen, die jeweils den paketorientierten Datenverkehr wahlfrei an die nicht durch den geschalteten Datenverkehr belegten n aus L Encodern ENC1 bis ENCL führen. Als Nebenbedingung für l und n muß selbstverständlich noch gelten: l+n ≤ L; L ≥ 2.

Jeder der L Encoder ENC1 bis ENCL gehört zu einem der L Sendekanäle. Die doppellinig gezeichneten Verbindungsleitungen deuten an, daß hier die digitalen Datensignale komplex sind, also einen Real- und einen Imaginärteil besitzen. Auf jeden der L Encoder ENC1 bis ENCL folgt jeweils ein variables Interpolationsfilter IF1 bis IFL (Kanalfilter) Daran schließt sich in jedem Signalpfad ein Modulator MOD1 bis MODL an, von denen jede auf die Frequenz seines zugehörigen Sendekanals abgestimmt ist. An den Ausgängen der Modulatoren MOD1 bis MODL sind Interpolatoren IS1 bis ISL mit festem Interpolationsfaktor 2 (z.B. gemäß DE 36 21 737 C2) angeschlossen, welche die komplexen digitalen Ausgangssignale der Modulatoren MOD1 bis MODL in reelle digitale Datensignale umsetzen. Über eine Verzweigung VZS gelangt das reelle digitale Datensignal eines jeden Sendekanals zu einem für alle gemeinsamen Digital/Analog-Umsetzer DAU, der das digitale Signal in ein analoges Signal wandelt. Das analoge Signal wird anschließend über ein Antialiasingfilter AAFS geführt.

In entgegengesetzter Richtung (in Empfangsrichtung) gelangt ein empfangenes analoges Datensignal über ein Antialiasingfilter AAFE an einen Analog/Digital-Umsetzer ADU. Das daraus hervorgehende reelle Datensignal wird über eine Verzweigung VZE allen Empfangs-Signalpfaden zugeführt, von denen jede einem der K Empfangskanäle zugeordnet ist. Jeder Empfangs-Signalpfad 1 bis K besitzt einen Dezimator DE1 bis DEK mit festem Dezimationsfaktor 2 (z.B. gemäß DE 36 21 737 C2), der das reelle digitale Ausgangssignal des Analog-Digitalumsetzers ADU in ein komplexes digitales Datensignal umformt. Auf den Dezimator DE1 bis DEK eines jeden Empfangs-Signalpfades 1 bis K folgt ein Demodulator DEM1 bis DEMK für das komplexe digitale Datensignal. Die Demodulatoren sind auf die Frequenz ihres zugehörigen Empfangskanals abgestimmt. Dem Demodulator DEM1 bis DEMK ist in jedem Signalpfad ein Dezimationsfilter DF1 bis DFK (matched Filter) nachgeschaltet.

Die Dezimationsfilter DF1 bis DFK wie auch die Interpolationsfilter IF1 bis IFL erfüllen die Wurzel-Nyquist-Bedingung. Der Aufbau und die Funktinosweise solcher variabler Dezimations- und Interpolationsfilter sind in den "Proceedings Second European Conference on Satellite Communications", Liege/Belgien, Oktober 1991, ESA P-332, S.457 bis 464 beschrieben.

In den K Empfangs-Signalpfaden befinden sich Synchronisierschaltungen SYNC1 bis SYNCK, wie sie ebenfalls aus "Proceedings Second European Conference on Satellite Communications" bekannt sind. Sie synchronisieren die Schaltungen im jeweiligen Signalpfad auf die Trägerfrequenz, die Trägerphase und den Abtasttakt des empfangenen Datensignals. Damit ist das Modem unabhängig von synchronisationssignalen, die ansonsten zusammen mit den Empfangssignalen übertragen werden müßten.

Am Ende eines jeden Empfangs-Singalpfades 1 bis K befindet sich ein Decoder DEC1 bis DECK. Sowohl die Codierung in den Sende-Signalpfaden 1 bis L als auch die Decodierung in den Empfangs-Signalpfaden 1 bis K geschieht vorzugsweise mit Viterbi-Codern/Decodern und wahlweise mit zusätzlichen verketteten Reed-Solomon-Codern/Decodern.

Entsprechend der wahlweisen Nutzung der Kanäle für geschalteten und paketorientierten Datenverkehr, wie oben für die Sendeseite beschrieben, wird eine entsprechende wahlweise Zuteilung der Empfangskanäle vorgesehen. Hierzu sind in Empfangsrichtung k (1 ≤ k ≤ K-1; K ≥ 2) Multiplexer MUXS1 bis MUXSk vorhanden, die jeweils den geschalteten Datenverkehr wahlfrei von einem der K Decoder DEC1 bis DECK an die zugeordneten k Ausgänge führen. Außerdem sind in Empfangsrichtung noch m (1 ≤ m ≤ K-1; K ≥ 2) Multiplexer MUXP1 bis MUXPm vorgesehen, die jeweils wahlfrei den paketorientierten Datenverkehr von den, nicht durch den geschalteten Datenverkehr belegten, m aus K Decodern DEC1 bis DECK an die zugeordneten m Ausgänge führen. Als Nebenbedingung für k und m muß selbstverständlich noch gelten: k+m ≤ K; K ≥ 2.

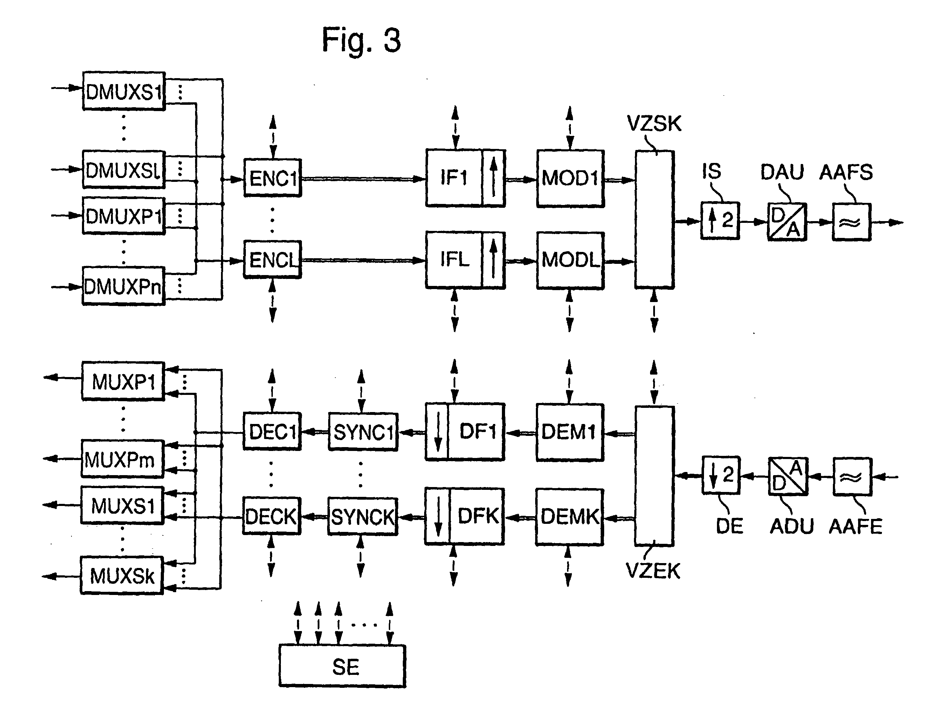

Statt für jeden Sende-Signalpfad 1 bis L einen eigenen Interpolator IS1 bis ISL, bzw. für den Empfangs-Signalpfad 1 bis K einen eigenen Dezimator DE1 bis DEK vorzusehen, wie in Figur 2 dargestellt, kann auch gemäß dem in Figur 3 gezeigten Ausführungsbeispiel für die L Sende-Signalpfade und für die K Empfangs-Signalpfade jeweils ein Interpolator IS bzw. Dezimator DE eingesetzt werden. Die Verzweigung VZSK vor dem Interpolator IS und die Verzweigung VZEK hinter dem Dezimator DE müssen komplexe digitale Signale aufteilen bzw. zusammenfassen. In allen anderen Details stimmt die Schaltung nach Figur 3 mit der in Figur 2 dargestellten Schaltung überein.

Sowohl die Verzweigungen VZS, VZE für reelle digitale Signale in Figur 2 als auch die Verzweigungen VZSK, VZEK für komplexe digitale Signale in Figur 3 können als Frequenzmultiplexer (VZS, VZSK in Senderichtung) bzw. Frequenzdemultiplexer (VZE, VZEK in Empfangsrichtung) ausgeführt sein.

Die Interpolatoren IS, IS1 bis ISL und die Dezimatoren DE, DE1 bis DEK können als komplexe Halbbandfilter realisiert sein (vgl. EP 0 250 926 B1).

Die komplexen Trägerschwingungen für die komplexen digitalen Modulatoren MOD1 bis MODL und Demodulatoren DEM1 bis DEMK werden zweckmäßigerweise mit der Methode der direkten digitalen Synthese (DDS, vgl. Analysis of the Output Spectrum of Direct Digital Frequency Synthesizers in the Presence of Phase-Accumulator Truncation", IEEE 1987, 41sT. Annual Frequency Synthesizers, S. 495 ff.) erzeugt.

Das Punkt-zu-Mehrpunkt Funkübertragungssystem soll, wie eingangs angegeben, eine sehr flexible Zuteilung von Übertragungskanälen zwischen der Zentralstation und den Teilnehmerstationen sowohl für geschalteten als auch für paketorientierten Datenverkehr ermöglichen, wobei der zur Verfügung stehende Funkkanal jeweils für beide Verkehrsarten optimal ausgenutzt wird. So kann dynamisch die Zahl der Kanalträgerfrequenzen, die geschaltete Daten übertragen gegen zusätzliche Träger, die paketorientierte Daten übertragen ausgetauscht werden und umgekehrt. Die in der Zentralstation ZS vorhandene Steuereinrichtung SE steuert sowohl den Auf- und Abbau sowie die Änderungen der Übertragungsparameter für die geschalteten Daten und ebenso für die paketorientierten Daten. Zu den veränderbaren Übertragungsparametern gehören zunächst für jeden einzelnen Kanal die Datenrate, die Modulationsart oder Modulationsgrad (z.B. N-PSK mit N = 2 ... 16 oder M- QAM mit M = 4 ... 256), die Codierung, die Kanalfrequenz oder auch der Sendepegel und Parameter zur Signalqualitätsbeurteilung, um eine vorgegebene Datenübertragungsqualität (z.B. Bitfehlerrate < 10⁻⁷) und Funkfeldeinflüsse (Fadings, Reflexionen) zu minimieren. Darüber hinaus gehört zu den veränderbaren Übertragungsparametern auch die Anzahl der Kanalträgerfrequenzen, die zur Übertragung eingesetzt werden, was Einträger- und Mehrträgerübertragung einschließt. Bei Mehrträgerübertragung wird jede einzelne Kanalträgerfrequenz individuell in sämtlichen oben aufgeführten Übertragungsparametern gesteuert. Hierbei ist außerdem von Bedeutung, daß die Kanalträgerfrequenzen für den geschalteten Datenverkehr vollkommen unabhängig von den Kanalträgerfrequenzen für den paketorientierten Datenverkehr in ihren Übertragungsparametern durch die Steuereinheit SE optimiert werden können. Bei einer Änderung von Übertragungsparametern gibt die Steuereinrichtung SE die entsprechenden Steuersignale (als strichlierte Doppelpfeil-Linien in den Figuren angedeutet) an die betreffenden Schaltblöcke in den Modems ab. Die Steuersignale für die Modems in den Teilnehmerstationen werden beispielsweise über einen Signalisierungskanal übertragen, der entweder an einen oder mehrere Nutzsignalkanäle des geschalteten Datenverkehrs angehängt ist oder als eigener Broadcastkanal ausgestrahlt wird. Die Datenrate aller Sendekanäle 1 bis L wird in den variablen Interpolationsfiltern IF1 bis IFL und die aller Empfangskanäle 1 bis K in den Dezimationsfiltern DF1 bis DFK eingestellt. Änderungen der Trägerfrequenzen der Sendekanäle 1 bis L werden in den Modulatoren MOD1 bis MODL und die Trägefrequenzen der Empfangskanäle 1 bis K in den Demodulatoren DEM1 bis DEMK vorgenommen. Eine Änderung der Modulation und Codierung erfolgt für die Trägerfrequenzen der Sendekanäle 1 bis L in den Encodern ENC bis ENCL und der Trägerfrequenzen der Empfangskanäle 1 bis K in den Decodern DEC1 bis DECK.

Wie oben beschrieben, gibt es in jeder Modemeinheit L-Sende und K Empfangskanäle. Die Anzahl 1 der aktivierten Sendekanäle für geschalteten Datenverkehr darf maximal die Zahl L-1 erreichen, so daß zur Änderung der Übertragungsparameter sowie zur Übertragung paketorientierten Datenverkehrs wenigstens noch ein Sendekanal zur Verfügung steht. Ebenso darf die Anzahl k der zur Übertragung geschalteten Datenverkehrs aktivierten Empfangskanäle maximal die Zahl K-1 erreichen, so daß zur Änderung der Übertrag von paketorientiertem Datenverkehr wenigstens noch ein Empfangskanal zur Verfügung steht. Die Anzahl l bzw. k von Kanälen mit geschaltetem Datenverkehr und die Anzahl n bzw. m von Kanälen mit paketorientiertem Datenverkehr können in den oben vorgegebenen Grenzen dynamisch verändert werden.

Wenn die Steuereinrichtung SE entweder eine Anforderung für eine Änderung der Übertagungskanäle erhält oder sie die Notwendigkeit nach einer Erhöhung der Störresistenz ermittelt hat und sie daraufhin die Übertragungsparameter dementsprechend neu berechnet, gibt sie ihre neuen Übertragungsparameter als Steuersignale an die betreffenden Schaltblöcke eines nicht aktiven Sende- und/oder Empfangskanals ab. Sobald die neuen Übertragungsparameter in den betreffenden Sendeund/oder Empfangskanälen der Modems der Zentralstation sowie der zugehörigen Teilnehmerstationen eingestellt worden sind, wird eine Bestätigung der erfolgreichen Aquisition aller neu aktivierten Sende- und/oder Empfangskanäle über den Signalisierungspfad bei der Steuereinrichtung SE abgewartet, bevor die Signalübertragung auf die neu aktivierten Sendeund/oder Empfangskanäle verlagert wird. Dann können auch die zuvor betriebenen Sende- und/oder Empfangskanäle deaktiviert bzw. zur Übertragung von paketorientiertem Datenverkehr freigegeben werden. Dadurch werden störende Unterbrechungen bei der Signalübertragung vermieden.

Die Auswahl der Sende- und/oder Empfangskanäle für geschalteten und paketorientierten Datenverkehr in den betroffenen Modems der Zentralstation und der Teilnehmerstationen trifft die Steuereinheit SE aufgrund der Statusinformationen, welche der Kanäle für geschalteten oder paketorientierten Datenverkehr genutzt werden und welche aktiv oder inaktiv sind.

In den vorangehend beschriebenen Ausführungsbeispielen ist jedem Sende- beziehungsweise Empfangskanal ein eigener Signalpfad zugeordnet. Das heißt, für die Sende- und für die Empfangsrichtung sind ein großer Teil der Schaltungsblöcke L-fach bzw. K-fach vorhanden. Dieser Aufwand an Schaltungen kann dadurch verringert werden, daß Teile sowohl für die L Sende-Signalpfade als auch für die K Empfangs-Sianalpfade im Zeitmultiplex betrieben werden.

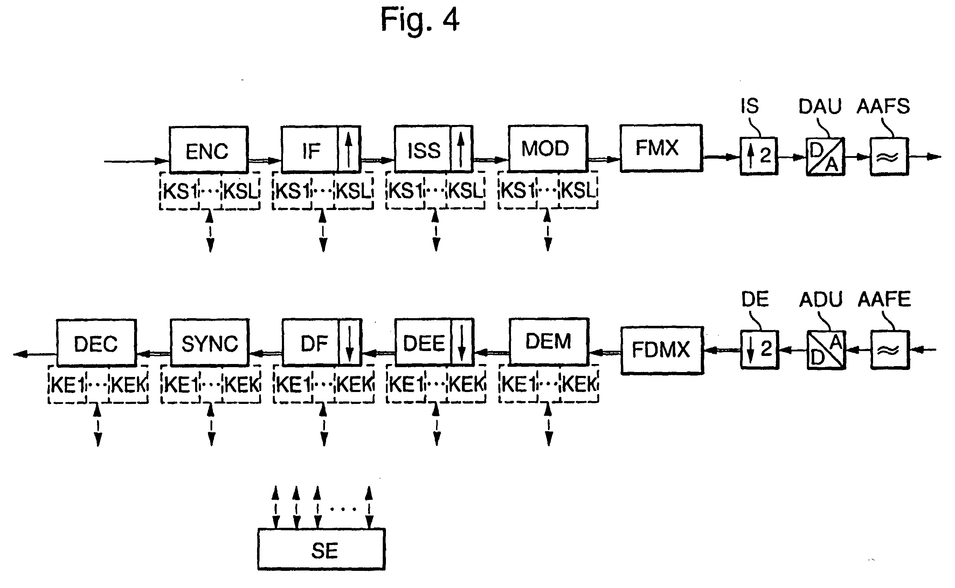

In der Figur 4 ist ein Signalpfad für die L Sendekanäle und ein Signalpfad für die K Empfangskanäle dargestellt. Der Sende-Signalpfad besitzt für die L Sendekanäle einen Encoder ENC, ein variables Interpolationsfilter IF und einen Modulator MOD. Außerdem kann zwischen dem variablen Interpolationsfilter IF und dem Modulator MOD noch ein weiterer Interpolator ISS mit einem festen Interpolationsfaktor eingefügt werden, wie der Figur 4 zu entnehmen ist. Wegen dieses zusätzlichen Interpolators ISS braucht das variable Interpolationsfilter IF nur einen geringeren Interpolationsfaktor zu haben. Auf die Funktion der einzelnen Schaltblöcke ENC, IF, ISS, MOD und der sich an den Frequenzmultiplexer FMX anschließenden Schaltblöcke (Interpolator IS, Digital/Analog-Umsetzer DAU, Antialiasing-Filter AAFS) wird hier nicht näher eingegangen, weil sie im Zusammenhang mit den in den Figuren 2 und 3 dargestellten Ausführungsbeispielen schon näher beschrieben worden sind. Dasselbe gilt für die einzelnen Schaltblöcke des in Figur 4 dargestellten Empfangs-Signalpfades. Ebenso ist dieser eine Empfangs-Signalpfad, in dem alle Schaltblöcke nur einfach vorkommen, für die Übertragung der K Empfangskanäle vorgesehen. Der optional zwischen dem Demodulator DEM und dem variablen Dezimationsfilter DF eingesetzte Dezimator DEE mit festem Dezimationsfaktor ermöglicht es, für das variable Dezimationsfilter DF einen geringeren Dezimationsfaktor vorzusehen.

Die an den einzelnen Schaltungseinheiten angefügten strichlierten Blöcke sollen verdeutlichen, daß die L Sendekanäle KS1 bis KSL im Zeitmultiplex über die eine Sende-Signalpfad-Verarbeitung und die K Empfangskanäle KE1 bis KEK im Zeitmultiplex über die eine Empfangs-Signalpfad-Verarbeitung betrieben werden können.

Die L Sendekanäle werden nach dem Modulator MOD von einem Frequenzmultiplexer FMX zu einem Sendesignal zusammengefaßt, und die Zerlegung eines Empfangssignals in die K Empfangskanäle erfolgt durch einen vor dem Demodulator DEM angeordneten Frequenzdemultiplexer FDMX.

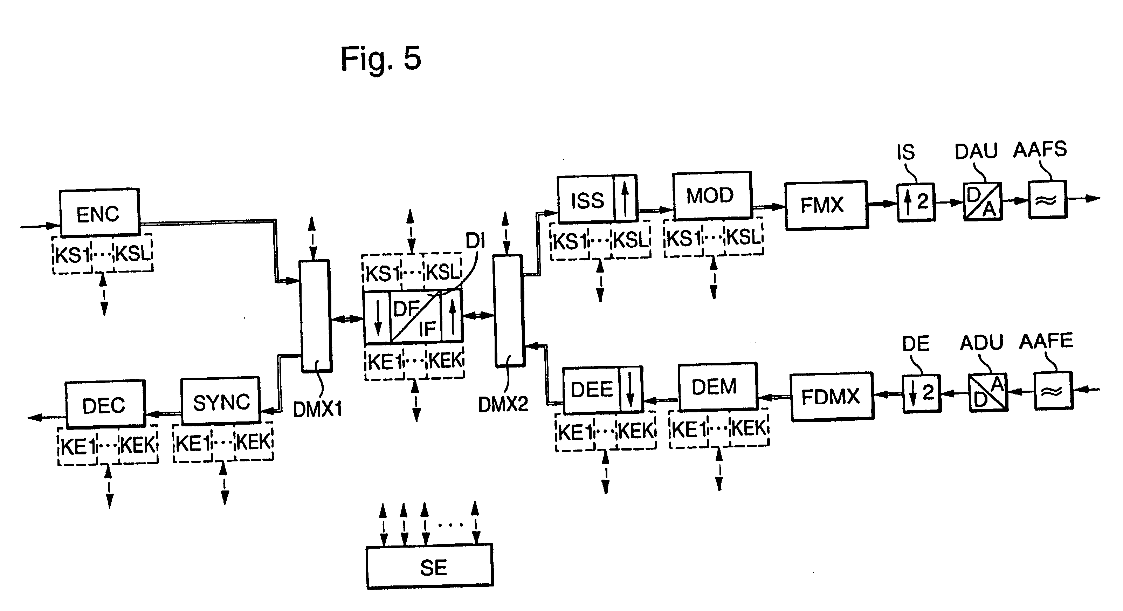

Eine weitere Konzentration der Schaltungseinheiten kann dadurch erfolgen, daß, wie in Figur 5 dargestellt, bezüglich der variablen Dezimation und der variablen Interpolation die L Sendekanäle und die K Empfangskanäle über eine einzige Einheit gemultiplext werden. Dazu ist eine Funktionseinheit DI vorgesehen, die sowohl ein variables Dezimationsfilter DF als auch ein variables Interpolationsfilter IF enthält.

Multiplexer/Demultiplexer DMX1 und DMX2 an beiden Toren der Funktionseinheit Dl bewirken, daß sowohl die L Sendekanäle als auch die K Empfangskanäle im Zeitmultiplex über die Funktionseinheit Dl verarbeitet werden können. Alle anderen Schaltungseinheiten, welche dieselben Bezugszeichen wie in Figur 4 aufweisen, haben auch dieselbe Funktion wie bei dem dort dargestellten Ausführungsbeispiel eines Modems.

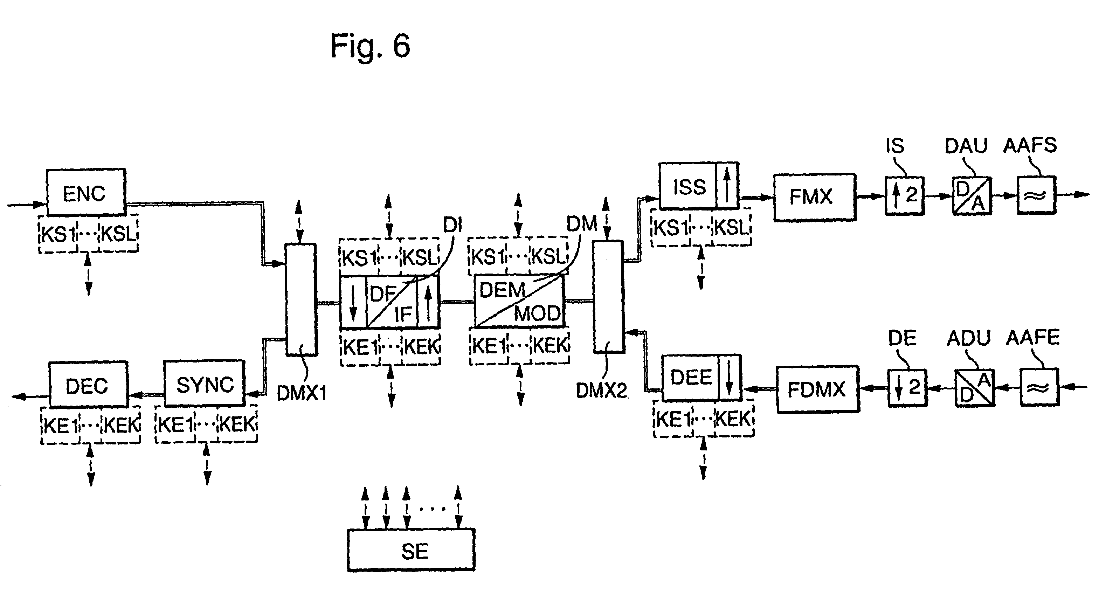

Bei dem in Figur 6 dargestellten Modem sind auch der Demodulator DEM und der Modulator MOD in einer gemeinsamen Funktionseinheit DM zusammengefaßt, welche sowohl die L Sende- als auch die K Empfangskanäle im Zeitmultiplex verarbeitet. Diese Schaltungsvariante des Modems bringt nochmals eine Reduzierung des Schaltungsaufwandes. Allerdings müssen der Interpolator ISS und der Dezimator DEE komplexe Koeffizienten aufweisen.

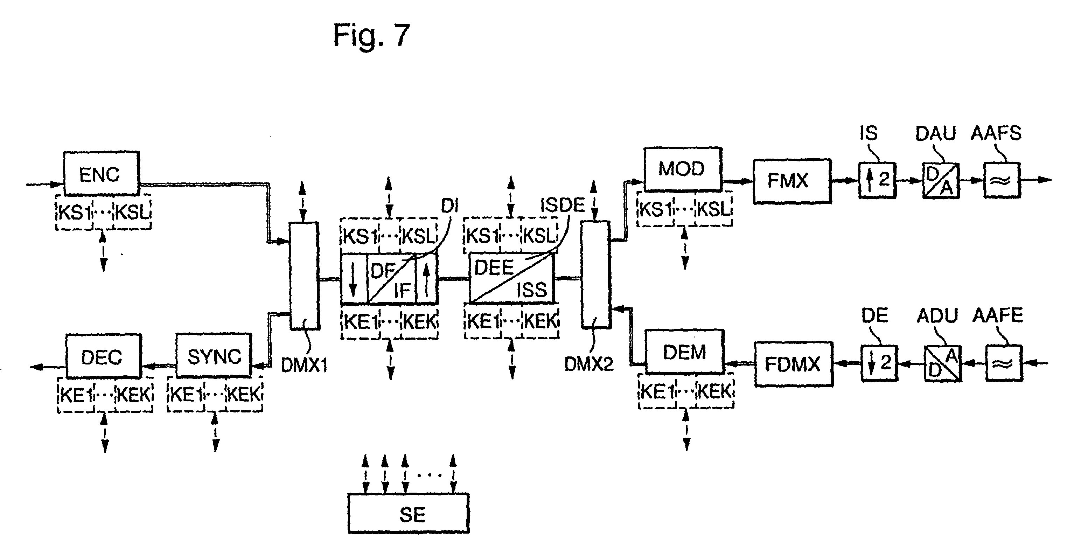

Die Figur 7 zeigt gegenüber der in Figur 6 dargestellten Ausführungsform eine noch aufwandsgünstigere Schaltung. Durch die Vertauschung der Reihenfolge von Modulator MOD und Interpolator ISS und der Vertauschung von Demodulator DEM und Dezimator DEE lassen sich der Interpolator ISS und der Dezimator DEE mit reellen Koeffizienten realisieren; beide sind in einer gemeinsamen Funktionseinheit ISDE zusammengefaßt. Die Vorteile der Zeitmultiplexverarbeitung der Sendeund Empfangs-Signalpfade bleiben erhalten.

Anstelle der Umschaltung auf noch nicht aktive Sende- und Empfangskanäle kann in jedem einzelnen Sende- beziehungsweise Empfangskanal der Modems auch eine kontinuierliche Veränderung der Übertragungsparameter vorgenommen werden. Die Übertragung kann ebenso kurzzeitig unterbrochen werden, so daß in diesem Unterbrechungszeitraum die Übertragungsparameter verändert werden können. In dem Unterbrechungszeitraum werden die empfangenen oder auszusendenden Daten zwischengespeichert, damit sie nicht verlorengehen.

## Patentansprüche

1. Punkt-zu-Mehrpunkt Funkübertragungssystem, bestehend aus einer Zentralstation (ZS) und mehreren Teilnehmerstationen einer Zentralstation (ZS) und mehreren Teilnehmerstationen (TS1, TS2 ...TSn), wobei die Übertragungskanäle zwischen der Zentralstation und den Teilnehmerstationen bedarfsweise zuteilbar sind,
**dadurch gekennzeichnet,**
- **daß** die Zentralstation (ZS) für jeden der maximal zur Verfügung stehenden Übertragungskanäle ein Modem (MDM) aufweist und ebenfalls jede Teilnehmerstation (TS1, TS2 ... TSn) mit einem Modem (MDM) ausgestattet ist,
- **daß** jedes Modem (MDM) L Sendekanäle, wobei L ≥ 2 ist, und K Empfangskanäle hat, wobei K ≥ 2 ist,
- **daß** l der L Sendekanäle mit 1 ≤ l ≤ L - 1 und k der K Empfangskanäle mit 1 ≤ k ≤ K-1 für die Übertragung von geschalteten Daten und n der L Sendekanäle mit 1 ≤ n ≤ L-1 und m der K Empfangskanäle mit 1 ≤ m ≤ K-1 für die Übertragung von paketorientierten Daten vorgesehen sind, wobei l + n ≤ L und k + m ≤ K ist,
- **daß** eine Steuereinrichtung (SE) vorhanden ist, die den paketorientierten Daten andere Sende- und Empfangskanäle zuordnet als den geschalteten Daten,
- und **daß** die Steuereinrichtung (SE) je nach der geforderten Zahl und Bandbreite der Übertragungskanäle und/oder der geforderten Störresistenz der Übertragungskanäle in den Sende- und Empfangskanälen sowohl für die geschalteten als auch die paketorientierten Daten mindestens einen der Übertragungsparameter - Kanalträgerfrequenz, Datenrate, Modulation, Codierung, Sendepegel, Parameter zur Signalqualitätsbeurteilung - einstellt.

2. Punkt-zu-Mehrpunkt Funkübertragungssystem nach Anspruch 1, **dadurch gekennzeichnet, daß** die Modems (MDM) in den Teilnehmerstationen (TS1, TS2 ... TSn) die Steuersignale für die Änderung der Übertragungsparameter sowohl in den Sende- und Empfangskanälen für die geschalteten Daten als auch in den Sende- und Empfangskanälen für die paketorientierten Daten über einen Signalisierungskanal erhalten, der innerhalb der geschalteten Daten übertragen wird.

3. Punkt-zu-Mehrpunkt Funkübertragungssystem nach Anspruch 1, **dadurch gekennzeichnet, daß** eine Änderung der Übertragungsparameter in mindestens einem Sende- und Empfangskanal für die Übertragung von paketorientierten Daten in den Zeitschlitzen zwischen den einzelnen Datenpaketen erfolgt und daß für geschaltete Daten eine Änderung der Übertragungsparameter in mindestens einem solchen Sende- und Empfangskanal erfolgt, in dem gerade keine geschalteten Daten übertragen werden, und erst nach abgeschlossener Aquisition des mindestens einen neuen Sende- und Empfangskanals eine Umschaltung von dem mindestens einen bisher im Betrieb befindlichen Sende- und Empfangskanal auf den mindestens einen neuen Sende-Empfangskanal erfolgt.

4. Punkt-zu-Mehrpunkt Funkübertragungssystem nach Anspruch 1, **dadurch gekennzeichnet, daß** die Übertragung von paketorientierten Daten in einem von mehreren Teilnehmerstationen gemeinsam genutzten Frequenzkanal im Zeitmultiplex erfolgt.

5. Punkt-zu-Mehrpunkt Funkübertragungssystem nach Anspruch 1, **dadurch gekennzeichnet, daß** für jeden der L-Sendekanäle ein Encoder (ENC1 bis ENCL) und ein Modulator (MOD1 bis MODL) vorhanden sind, und daß zwischen dem Encoder (ENC1 bis ENCL und dem Modulator (MOD1 bis MODL) jeweils ein variables Interpolationsfilter (IF1 bis IFL) vorgesehen ist.

6. Punkt-zu-Mehrpunkt Funkübertragungssystem nach Anspruch 5, **dadurch gekennzeichnet, daß** jedem Modulator (MOD1 bis MODL) jeweils ein Interpolator (IS1 bis ISL) nachgeschaltet ist, welcher das komplexe digitale Ausgangssignal des jeweiligen Modulators (MOD1 bis MODL) in ein reelles digitales Signal umwandelt.

7. Punkt-zu-Mehrpunkt Funkübertragungssystem nach Anspruch 5, **dadurch gekennzeichnet, daß** die Ausgangssignale der L Modulatoren (MOD1 bis MODL) der L-Sendekanäle über eine Verzweigung (VZSK) einem Interpolator (IS) zugeführt sind, welcher das komplexe digitale Ausgangssignal des jeweiligen Modulators (MOD1 bis MODL) in ein reelles digitales Signal umwandelt.

8. Punkt-zu-Mehrpunkt Funkübertragungssystem nach Anspruch 1, **dadurch gekennzeichnet, daß** für die L Sendekanäle ein Encoder (ENC), ein Modulator (MOD) und ein zwischen beiden eingefügtes variables Interpolationsfilter (IF) vorgesehen sind und daß der Encoder (ENC), der Modulator (MOD) und das variable Interpolationsfilter (IF) alle L Sendekanäle im Zeitmultiplex verarbeiten.

9. Punkt-zu-Mehrpunkt Funkübertragungssystem nach Anspruch 8, **dadurch gekennzeichnet, daß** ein Multiplexer (FMX) das komplexe digitale Ausgangssignal des Modulators (MOD) einem Interpolator (IS) zuführt, welcher das komplexe digitale Ausgangssignal in ein reelles digitales Signal umwandelt.

10. Punkt-zu-Mehrpunkt Funkübertragungssystem nach Anspruch 1, **dadurch gekennzeichnet, daß** für jeden der K Empfangskanäle ein Demodulator (DEM1 bis DEMK) und ein Decoder (DEC1 bis DECK) vorgesehen sind, und daß zwischen dem Demodulator (DEM1 bis DEMK) und dem Decoder (DEC1 bis DECK) jeweils ein variables Dezimationsfilter (DF1 bis DFK) zugeschaltet ist.

11. Punkt-zu-Mehrpunkt Funkübertragungssystem nach Anspruch 10, **dadurch gekennzeichnet, daß** jedem Demodulator (DEM1 bis DEMK) jeweils ein Dezimator (DE1 bis DEK) vorgeschaltet ist, welcher ein reelles digitales Empfangssignal in ein komplexes digitales Signal umwandelt.

12. Punkt-zu-Mehrpunkt Funkübertragungssystem nach Anspruch 10, **dadurch gekennzeichnet, daß** für die K Empfangskanäle ein Dezimator (DE) vorgesehen ist, welcher ein reelles digitales Empfangssignal in ein komplexes digitales Signal umwandelt, das den Demodulatoren (DEM1 bis DEMK) der K Empfangskanäle über eine Verzweigung (VZEK) zugeführt wird.

13. Punkt-zu-Mehrpunkt Funkübertragungssystem nach Anspruch 1, **dadurch gekennzeichnet, daß** für die K Empfangskanäle ein Demodulator (DEM), ein Decoder (DEC) und ein zwischen beiden eingefügtes variables Dezimationsfilter (DF) vorgesehen sind und daß alle K Empfangskanäle im Zeitmultiplex über den Demodulator (DEM), das Dezimationsfilter (DF) und den Decoder (DEC) verarbeitet werden.

14. Punkt-zu-Mehrpunkt Funkübertragungssystem nach Anspruch 13, **dadurch gekennzeichnet, daß** ein Dezimator (DE) ein reelles digitales Empfangssignal in ein komplexes digitales Empfangssignal umwandelt und daß ein Demultiplexer (FDMX) vorgesehen ist, der das komplexe digitale Empfangssignal dem Demodulator (DEM) zuführt.

15. Punkt-zu-Mehrpunkt Funkübertragungssystem nach einem der Ansprüche 6, 7, 9, 11, 12, 13, **dadurch gekennzeichnet, daß** der Interpolator (IS1 bis ISL, IS) bzw. der Dezimator (DE1 bis DEK, DE) als komplexes Halbbandfilter ausgeführt ist.

16. Punkt-zu-Mehrpunkt Funkübertragungssystem, nach Anspruch 7 oder 12, **dadurch gekennzeichnet, daß** die sendeseitige Verzweigung (VZS, VZSK) als Frequenzmultiplexer ausgeführt ist und daß die empfangsseitige Verzweigung (VZE, VZEK) als Frequenzdemultiplexer ausgeführt ist.

17. Punkt-zu-Mehrpunkt Funkübertragungssystem nach Anspruch 8 oder 13, **dadurch gekennzeichnet, daß** mit Hilfe von Multiplexern/Demultiplexern (DMX1, DMX2) sowohl die L Sendekanäle als auch die K Empfangskanäle im Zeitmultiplex über eine gemeinsame Funktionseinheit (DE) mit einem variablen Dezimations- und einem variablen Interpolationsfilter verarbeitet werden.

18. Punkt-zu-Mehrpunkt Funkübertragungssystem nach Anspruch 8 oder 13, **dadurch gekennzeichnet, daß** mit Hilfe von Multiplexern/Demultiplexern (DMX1, DMX2) sowohl die L Sendekanäle als auch die K Empfangskanäle im Zeitmultiplex über eine erste Funktionseinheit (DI) mit einem variablen Dezimationsund einem variablen Interpolationsfilter und über eine zweite Funktionseinheit (DM) mit einem Modulator und Demodulator verarbeitet werden.

19. Punkt-zu-Mehrpunkt Funkübertragungssystem nach Anspruch 8 oder 13, **dadurch gekennzeichnet, daß** mit Hilfe von Multiplexern/Demultiplexern (DMX1, DMX2) sowohl die L Sendekanäle als auch die K Empfangskanäle im Zeitmultiplex über eine erste Funktionseinheit (DI) mit einem variablen Dezimationsund einem variablen Interpolationsfilter und über eine zweite Funktionseinheit (ISDE) mit einem Interpolator und einem Dezimator mit festem Interpolationsfaktor bzw. Dezimationsfaktor verarbeitet werden.

## Claims

1. A point-to-multipoint wireless transmission system consisting of a central station (ZS) and a plurality of subscriber stations (TS1, TS2 ... TSn), with the transmission channels being able to be allocated as required between the central station and the subscriber stations, **characterized**
- **in that** the central station (ZS) has a modem (MDM) for each of the maximum number of available transmission channels and each subscriber station (TS1, TS2 ... TSn) is likewise fitted with a modem (MDM);
- **in that** each modem (MDM) has L transmission channels, where L ≥ 2, and K reception channels, where K ≥ 2;
- **in that** I of the L transmission channels, where 1 ≤ I ≤ L - 1, and k of the K transmission channels, where 1 ≤ k ≤ K - 1, are provided for the transmission of switched data and n of the L transmission channels, where 1 ≤ n ≤ L-1, and m of the K reception channels, where 1 ≤ m ≤ K-1, are provided for the transmission of packet-oriented data, where I + n ≤ L and k + m ≤ K;
- **in that** a control device (SE) is present which associates different transmission channels and reception channels to the packet-oriented data than to the switched data;
- and **in that** the control device (SE) sets at least one of the transmission parameters - channel carrier frequency, data rate, modulation, encoding, transmission level, parameters for the evaluation of signal quality - for both the switched data and the packet-oriented data in the transmission and reception channels in dependence on the required number and bandwidth of the transmission channels and/or of the required interference resistance of the transmission channels.

2. A point-to-multipoint wireless transmission system in accordance with claim 1, **characterized in that** the modems (MDM) in the subscriber stations (TS1, TS2 ... TSn) receive the control signals for the change of the transmission parameters both in the transmission channels and in the reception channels for the switched data and in the transmission channels and in the reception channels for the packet oriented data via a signalization channel which is transmitted within the switched data.

3. A point-to-multipoint wireless transmission system in accordance with claim 1, **characterized in that** a change of the transmission parameters takes place in at least one transmission channel and reception channel for the transmission of packet-oriented data in the time slots between the individual data packages; and **in that** a change of the transmission parameters for switched data takes place in at least one such transmission channel and reception channel in which no switched data are currently being transmitted and a switch from the at least one transmission channel and reception channel previously in operation to the at least one new transmission channel and reception channel only takes place after a concluded acquisition of the at least one new transmission channel and reception channel.

4. A point-to-multipoint wireless transmission system in accordance with claim 1, **characterized in that** the transmission of packet-oriented data takes place in time multiplex in a frequency channel utilized jointly by a plurality of subscriber stations.

5. A point-to-multipoint wireless transmission system in accordance with claim 1, **characterized in that** an encoder (ENC1 to ENCL) and a modulator (MOD1 to MODL) are present for each of the L transmission channels; and **in that** a variable interpolation filter (IF1 to IFL) is provided in each case between the encoder (ENC1 to ENCL) and the modulator (MOD1 to MODL).

6. A point-to-multipoint wireless transmission system in accordance with claim 5, **characterized in that** an interpolator (IS1 to ISL) is in each case disposed after each modulator (MOD1 to MODL) and converts the complex digital output signal of the respective modulator (MOD1 to MODL) into a real digital signal.

7. A point-to-multipoint wireless transmission system in accordance with claim 5, **characterized in that** the output signals of the L modulators (MODI to MODL) of the L transmission channels are supplied via a branch (VZSK) to an interpolator (IS) which converts the complex digital output signal of the respective modulator (MODI to MODL) into a real digital signal.

8. A point-to-multipoint wireless transmission system in accordance with claim 1, **characterized in that** an encoder (ENC), a modulator (MOD) and a variable interpolation filter (IF) inserted between the two are provided for the L transmission channels; and **in that** the encoder (ENC), the modulator (MOD) and the variable interpolation filter (IF) process all L transmission channels in time multiplex.

9. A point-to-multipoint wireless transmission system in accordance with claim 8, **characterized in that** a multiplexer (FMX) supplies the complex digital output signal of the modulator (MOD) to an interpolator (IS) which converts the complex digital output signal into a real digital signal.

10. A point-to-multipoint wireless transmission system in accordance with claim 1, **characterized in that** a demodulator (DEM1 to DEMK) and a decoder (DEC1 to DECK) are provided for each of the K reception channels; and **in that** a variable decimation filter (DF1 to DFK) is switched in each case between the demodulator (DEM1 to DEMK) and the decoder (DEC1 to DECK).

11. A point-to-multipoint wireless transmission system in accordance with claim 10, **characterized in that** a decimator (DE1 to DEK), which converts a real digital reception signal into a complex digital signal, is in each case connected before each demodulator (DEM1 to DEMK).

12. A point-to-multipoint wireless transmission system in accordance with claim 10, **characterized in that** a decimator (DE) is provided for the K reception channels which converts a real digital reception signal into a complex digital signal which is supplied to the demodulators (DEM1 to DEMK) of the K receptions channels via a branch (VZEK).

13. A point-to-multipoint wireless transmission system in accordance with claim 1, **characterized in that** a demodulator (DEM), a decoder (DEC) and a variable decimation filter (DF) inserted between the two are provided for the K reception channels; and **in that** all K reception channels are processed in time multiplex via the demodulator (DEM), the decimation filter (DF) and the decoder (DEC).

14. A point-to-multipoint wireless transmission system in accordance with claim 13, **characterized in that** a decimator (DE) converts a real digital reception signal into a complex digital reception signal; and **in that** a demultiplexer (FDMX) is provided which supplies the complex digital reception signal to the demodulator (DEM).

15. A point-to-multipoint wireless transmission system in accordance with any one of claims 6, 7, 9, 11, 12, 13, **characterized in that** the interpolator (IS1 to ISL, IS) or the decimator (DE1 to DEK, DE) is designed as a complex half band filter.

16. A point-to-multipoint wireless transmission system in accordance with claim 7 or claim 12, **characterized in that** the branch (VZS, VZSK) at the transmission side is designed as a frequency multiplexer; and **in that** the branch (VZE, VZEK) at the reception side is designed as a frequency demultiplexer.

17. A point-to-multipoint wireless transmission system in accordance with claim 8 or claim 13, **characterized in that**, with the aid of multiplexers/demultiplexers (DMX1, DMX2), both the L transmission channels and the K reception channels are processed in time multiplex via a common functional unit (DE) with a variable decimation filter and a variable interpolation filter.

18. A point-to-multipoint wireless transmission system in accordance with claim 8 or claim 13, **characterized in that**, with the aid of multiplexers/demultiplexers (DMX1, DMX2), both the L transmission channels and the K reception channels are processed via a first functional unit (D1) with a variable decimation filter and a variable interpolation filter and via a second functional unit (DM) with a modulator and a demodulator.

19. A point-to-multipoint wireless transmission system in accordance with claim 8 or claim 13, **characterized in that**, with the aid of multiplexers/demultiplexers (DMX1, DMX2), both the L transmission channels and the K reception channels are processed via a first functional unit (D1) with a variable decimation filter and a variable interpolation filter and via a second functional unit (ISDE) with an interpolator and a decimator with a fixed interpolation factor or decimation factor.

## Revendications

1. Système de radiocommunication point à multipoint, composé d'une station centrale (ZS) et de plusieurs stations d'abonné (TS1, TS2 ... TSn), moyennant quoi les canaux de transmission entre la station centrale et les stations d'abonné peuvent être alloués selon les besoins,
**caractérisé en ce que**,
- la station centrale (ZS) présente un modulateur-démodulateur (MDM) pour chacun des canaux mis au maximum à disposition, et chaque station d'abonné (TS1, TS2 ... TSn) est également équipée d'un modulateur-démodulateur (MDM),
- chaque modulateur-démodulateur (MDM) comporte des canaux d'émission L, où L ≥ 2, et des canaux de réception K, où K ≥ 2,
- l des canaux d'émission L avec 1 ≤ l ≤ L - 1 et k des canaux de réception K avec 1 ≤ k ≤ K - 1 sont prévus pour la transmission de données commutées, et n des canaux d'émission L avec 1 ≤ n ≤ L - 1 et m des canaux de réception K avec 1 ≤ m ≤ K - 1 sont prévus pour la transmission de données en paquet, moyennant quoi on obtient l + n ≤ L et k + m ≤ K,
- un dispositif de commande (SE) existe, qui alloue aux données en paquet d'autres canaux d'émission et de transmission que ceux alloués aux données commutées,
- et le dispositif de commande (SE) règle, en fonction du nombre demandé et de la largeur de bande des canaux de transmission et/ou de la résistance aux interférences demandée des canaux de transmission dans les canaux d'émission et de réception, tant pour les données commutées que pour les données en paquet, au moins un des paramètres de transmission-fréquence porteuse du canal, débit des données, modulation, codage, niveau d'émission, paramètre d'analyse de la qualité du signal.

2. Système de radiocommunication point à multipoint selon la revendication 1, **caractérisé en que** les modulateurs-démodulateurs (MDM) dans les stations d'abonné (TS1, TS2 ... TSn) reçoivent les signaux de commande pour la modification des paramètres de transmission tant dans les canaux d'émission et de réception destinés aux données commutées que dans les canaux d'émission et de réception destinés aux données en paquet via un canal de signalisation, qui est transmis dans le contenu des données commutées.

3. Système de radiocommunication point à multipoint selon la revendication 1, **caractérisé en ce qu'**une modification des paramètres de transmission dans au moins un canal d'émission et de réception pour la transmission des données en paquet est effectuée dans les créneaux temporels entre les différents paquets de données, et **en ce que**, concernant les données commutées, une modification des paramètres de transmission est effectuée dans au moins un tel canal d'émission et de réception, dans lequel il n'est justement pas transmis de données commutées, et **en ce que**, une commutation de l'au moins un canal d'émission et de réception jusque là opérationnel, ne se fait vers l'au moins un nouveau canal d'émission et de réception qu'une fois l'acquisition de l'au moins un nouveau canal d'émission et de réception terminée.

4. Système de radiocommunication point à multipoint selon la revendication 1, **caractérisé en ce que** la transmission des données en paquet dans un canal de fréquence exploité mutuellement par plusieurs stations d'abonné, est effectuée en mode multiplex temporel.

5. Système de radiocommunication point à multipoint selon la revendication 1, **caractérisé en ce qu'**il existe, pour chacun des canaux d'émission L, un encodeur (ENCl à ENCL) et un modulateur (MODl à MODL), et **en ce qu'**il est prévu respectivement un filtre d'interpolation variable (IFl à IFL) entre l'encodeur (ENCl à ENCL) et le modulateur (MODl à MODL).

6. Système de radiocommunication point à multipoint selon la revendication 5, **caractérisé en ce qu'**en aval de chaque modulateur (MOD1 à MODL) est monté respectivement un interpolateur (IS1 à ISL), lequel convertit le signal de sortie numérique complexe du modulateur respectif (MOD1 à MODL) en un signal numérique réel.

7. Système de radiocommunication point à multipoint selon la revendication 5, **caractérisé en ce que** les signaux de sortie des modulateurs L (MOD1 à MODL) des canaux d'émission L sont fournis via un répartiteur (VZSK) à un interpolateur (IS), lequel convertit le signal de sortie numérique complexe du modulateur respectif (MOD1 à MODL) en un signal numérique réel.

8. Système de radiocommunication point à multipoint selon la revendication 1, **caractérisé en ce qu'**un encodeur (ENC), un modulateur (MOD) et un filtre d'interpolation variable (IF) ajouté entre ces deux derniers éléments sont prévus au niveau des canaux d'émission L, et **en ce que** l'encodeur (ENC), le modulateur (MOD) et le filtre d'interpolation variable (IF) traitent tous les canaux d'émission L en mode multiplex temporel.

9. Système de radiocommunication point à multipoint selon la revendication 8, **caractérisé en ce qu'**un multiplexeur (FMX) fournit le signal de sortie numérique complexe du modulateur (MOD) à un interpolateur (IS), lequel convertit le signal de sortie numérique complexe en un signal numérique réel.

10. Système de radiocommunication point à multipoint selon la revendication 1, **caractérisé en ce qu'**un démodulateur (DEM1 à DEMK) et un décodeur (DEC1 à DECK), sont prévus au niveau de chacun des canaux de réception K, et **en ce que**, respectivement, un filtre de décimation variable (DF1 à DFK) est connecté entre le démodulateur (DEM1 à DEMK) et le décodeur (DEC1 à DECK).

11. Système de radiocommunication point à multipoint selon la revendication 10, **caractérisé en ce qu'**un décimateur (DE1 à DEK) est monté respectivement en amont de chaque démodulateur (DEM1 à DEMK), lequel convertit un signal de réception numérique réel en un signal numérique complexe.

12. Système de radiocommunication point à multipoint selon la revendication 10, **caractérisé en ce qu'**il est prévu, au niveau des canaux de réception K, un décimateur (DE), lequel convertit un signal de réception numérique réel en un signal numérique complexe, qui est fourni aux démodulateurs (DEM1 à DEMK) des canaux de réception K via un répartiteur (VZEK).

13. Système de radiocommunication point à multipoint selon la revendication 1, **caractérisé en ce qu'**un démodulateur (DEM), un décodeur (DEC) et un filtre de décimation (DF) variable ajouté entre ces deux derniers éléments sont prévus au niveau des canaux de réception K, et **en ce que** tous les canaux de réception K sont traités en mode multiplex temporel via le démodulateur (DEM), le filtre de décimation (DF) et le décodeur (DEC) .

14. Système de radiocommunication point à multipoint selon la revendication 13, **caractérisé en ce qu'**un décimateur (DE) convertit un signal de réception numérique réel en un signal de réception numérique complexe, et **en ce qu'**un démultiplexeur (FDMX) est prévu, qui fournit le signal de réception numérique complexe au démodulateur (DEM) .

15. Système de radiocommunication point à multipoint selon l'une quelconque des revendications 6, 7, 9, 11, 12, 13, **caractérisé en ce que** l'interpolateur (IS1 à ISL, IS) ou le décimateur (DE1 à DEK, DE) est réalisé comme un filtre demi-bande complexe.

16. Système de radiocommunication point à multipoint selon la revendication 7 ou 12, **caractérisé en ce que** le répartiteur du côté émission (VZS, VZSK) est réalisé comme un multiplexeur de fréquence, et **en ce que** le répartiteur du côté réception (VZE, VZEK) est réalisé comme un démultiplexeur de fréquence.

17. Système de radiocommunication point à multipoint selon la revendication 8 ou 13, **caractérisé en ce que** tant les canaux d'émission L que les canaux de réception K sont traités, à l'aide de multiplexeurs / démultiplexeurs (DMX1, DMX2) en mode multiplex temporel via une unité fonctionnelle (DE) commune comportant un filtre de décimation variable et un filtre d'interpolation variable.

18. Système de radiocommunication point à multipoint selon la revendication 8 ou 13, **caractérisé en ce que** tant les canaux d'émission L que les canaux de réception K sont traités, à l'aide de multiplexeurs / démultiplexeurs (DMX1, DMX2) en mode multiplex temporel via une première unité fonctionnelle (DI) comportant un filtre de décimation variable et un filtre d'interpolation variable et via une seconde unité fonctionnelle (DM) comportant un modulateur et un démodulateur.

19. Système de radiocommunication point à multipoint selon la revendication 8 ou 13, **caractérisé en ce que** tant les canaux d'émission L que les canaux de réception K sont traités, à l'aide de multiplexeurs / démultiplexeurs (DMX1, DMX2) en mode multiplex temporel via une première unité fonctionnelle (DI) comportant un filtre de décimation variable et un filtre d'interpolation variable et via une seconde unité fonctionnelle (ISDE) comportant un interpolateur et un décimateur avec un facteur d'interpolation et/ou un facteur de décimation fixe.
